# NOUVEAU FASCICULE DE BREVET EUROPEEN

(11) **EP 3 749 838 B2**
(45) Date de publication et mention de la décision concernant l'opposition: **07.05.2025**
(45) Mention de la délivrance du brevet: 20.04.2022
(21) Numéro de dépôt: 19702278.3
(22) Date de dépôt: 01.02.2019
(51) Int. Cl.: F01D 5/22, F01D 5/28

(54) **AUBE DE TURBOMACHINE D'AERONEF**
LEITSCHAUFEL FÜR EIN FLUGZEUGTURBINENTRIEBWERK
VANE FOR AN AIRCRAFT TURBINE ENGINE

(30) Priorité: 08.02.2018 FR 1851070
(43) Date de publication de la demande: 16.12.2020
(73) Titulaire: SAFRAN AIRCRAFT ENGINES, 75015 Paris (FR)
(72) Inventeur: LOISEL, Bruno, Marc-Etienne, 77550 MOISSY-CRAMAYEL (FR); DEFLANDRE, Stéphanie, Aline, Marie, 77550 MOISSY-CRAMAYEL (FR); DELCOIGNE, Eric, Jacques, 77550 MOISSY-CRAMAYEL (FR); LIMOUSIN, Franck, Denis, Daniel, 77550 MOISSY-CRAMAYEL (FR); PERSON, Laëtitia, Nicole, 77550 MOISSY-CRAMYEL (FR)
(74) Mandataire: Gevers & Orès
(86) Numéro de dépôt international: PCT/EP2019/052521
(87) Numéro de publication internationale: WO 2019/154734

(56) Documents cités:
- EP-A1- 3 006 673
- FR-A1- 2 985 759
- US-A- 5 408 826
- US-A1- 2015 369 058
- US-A1- 2015 369 058

## Description

### DOMAINE TECHNIQUE

La présente invention se rapporte au domaine général de la fabrication des aubes de rotor pour une turbomachine d'aéronef.

### ÉTAT DE LA TECHNIQUE

L'état de la technique comprend notamment le document FR-A1-2 985 759.

Classiquement, une turbine axiale de turbomachine se compose d'une succession d'étages axiaux (selon l'axe de circulation des flux de gaz) disposés en série. Chaque étage comporte une roue mobile à aubes formant rotor et un distributeur aubagé formant stator. La roue mobile est mise en rotation en vis-à-vis du distributeur correspondant.

Dans la présente demande, l'amont et l'aval sont définis par rapport au sens d'écoulement normal des flux d'air (de l'amont vers l'aval) à travers la turbomachine. On appelle "axe de la turbomachine", l'axe de rotation du rotor principal de la turbomachine. La direction axiale correspond à la direction de l'axe de la turbomachine, et une direction radiale est une direction perpendiculaire à l'axe de la turbomachine et coupant cet axe. De même, un plan axial est un plan contenant l'axe de la turbomachine, et un plan radial est un plan perpendiculaire à cet axe. Les adjectifs "intérieur" et "extérieur" sont utilisés en référence à une direction radiale de sorte que la partie intérieure d'un élément est, suivant une direction radiale, plus proche de l'axe de la turbomachine que la partie extérieure du même élément. L'axe d'empilement d'une aube est l'axe perpendiculaire à l'axe de la turbomachine, qui passe par le centre de gravité de la section la plus intérieure de la pale de l'aube (i.e., la section la plus proche de l'axe de la turbomachine). Typiquement, une aube de turbomachine comprend une pale s'étendant suivant l'axe d'empilement de l'aube, entre les extrémités proximale et distale (i.e., intérieure et extérieure) de l'aube.

La roue mobile est classiquement constituée d'un disque annulaire centré sur l'axe de rotation de la roue, sur lequel sont fixées une pluralité d'aubes.

Un exemple d'aube est représenté sur la figure 1. Une aube de ce type est décrite dans le document de brevet FR-B1-2 985 759. Cette aube 10 comprend une pale 16 s'étendant suivant l'axe d'empilement X de l'aube, entre les extrémités proximale 10A et distale 10B de l'aube 10. A son extrémité proximale 10A, l'aube comprend une plateforme 19 et un pied 12 par lequel elle est fixée au disque (non représenté). A son extrémité distale 10B, l'aube 10 présente un talon 14. Lorsque plusieurs aubes 10 sont fixées sur le disque, leurs talons 14 sont disposés bord à bord de manière à former une couronne circonférentielle délimitant une surface de révolution autour de l'axe A de rotation de la roue. Cette couronne a notamment pour fonction de délimiter la surface extérieure de la veine d'écoulement des flux de gaz circulant entre les pales 16 et de limiter les fuites de gaz au niveau de l'extrémité distale 10B des aubes 10.

Le talon 14 comprend une plateforme 20 délimitant extérieurement la veine d'écoulement du gaz circulant entre les pales 16, et présentant des bords latéraux 21, 22 opposés. La plateforme 20 comporte une partie amont 24 appelée « becquet amont » et une partie aval 28 appelée « becquet aval ». Le talon 14 comprend également des léchettes d'étanchéité amont 31 et aval 32 s'étendant radialement vers l'extérieur à partir de la face extérieure de la plateforme 20. Ces léchettes ont une orientation générale circonférentielle ou transversale par rapport à l'axe de rotation de la roue. Chacun des bords latéraux 21, 22 de la plateforme présente, entre les léchettes amont 31 et aval 32, un profil sensiblement en « Z ».

Lorsque plusieurs aubes 10 sont fixées sur le disque, les léchettes amont 31 et aval 32 sont disposées bord à bord de manière à former un anneau rotatif d'axe A, cet anneau étant contenu sensiblement dans un plan radial. Un tel anneau a notamment pour fonction de limiter le jeu existant entre les aubes 10 et un carter (non représenté) qui entoure les aubes 10 afin de limiter les fuites de gaz à cet endroit. Ce carter porte un revêtement annulaire abradable qui peut coopérer par frottement avec les léchettes des aubes afin de limiter ces fuites par effet labyrinthe.

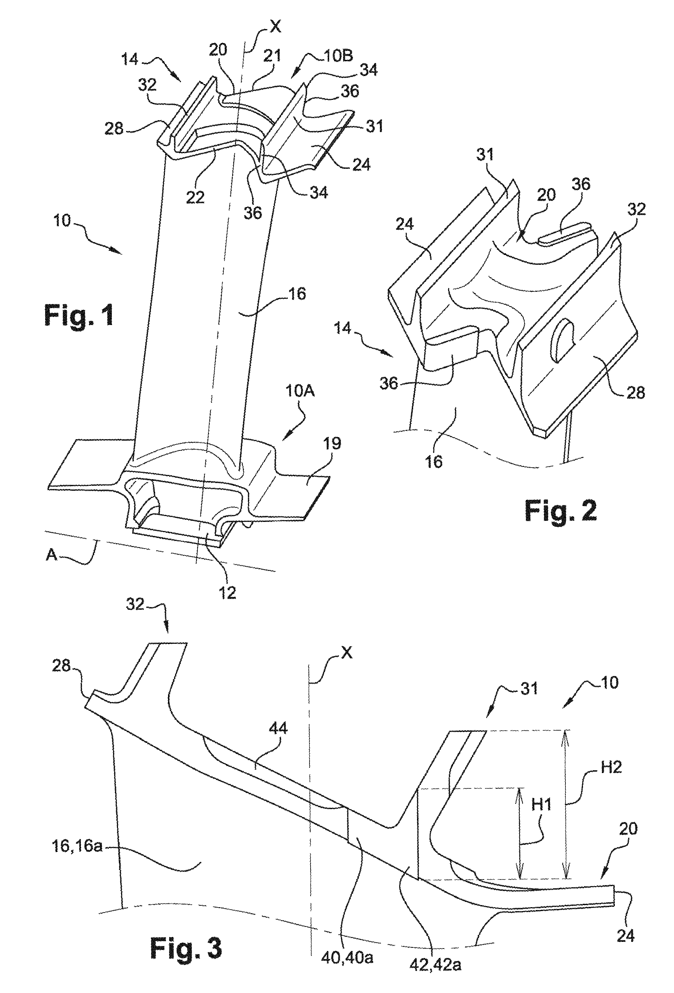

Dans le but d'amortir les vibrations auxquelles les aubes 10 sont soumises en fonctionnement, les aubes 10 sont montées sur leur disque avec une contrainte de torsion autour de leur axe d'empilement X. La géométrie des talons 14 est telle que chaque aube 10 est mise en contrainte de torsion par appui sur les aubes 10 voisines principalement le long des faces latérales 34 de la léchette amont 31, dans le cadre de la géométrie d'aube représentée. Les faces latérales 34 définissent donc les surfaces de contact inter-aubes et sont le lieu de frottements importants lors du fonctionnement de la turbomachine. Pour être protégées contre l'usure, les faces latérales 34, sont munies d'un revêtement ou insert en matériau résistant aux frottements. Il peut, par exemple, s'agir d'un matériau commercialisé sous la marque Stellite^{®}. Ce revêtement anti-usure 36 est mieux visible à la figure 2.

Classiquement, ce revêtement 36 anti-usure est déposé sur les faces latérales 34 par soudure, par exemple par soudure à la goutte, impliquant la création d'un arc électrique pour la fusion de la matière. Il s'agit souvent d'une opération manuelle, l'alliage de type Stellite^{®} étant sous forme d'une goutte liquide lors du dépôt.

L'alliage Stellite^{®} est un alliage d'acier à haute teneur en chrome (Cr) et en cobalt (Co). Il peut aussi contenir une petite quantité de tungstène (W) ou de molybdène (Mo) et une petite quantité de carbone (C). L'alliage Stellite^{®} n'est pas forgeable et doit être soit moulé, soit fixé par soudure sur un objet dont il forme une partie ou auquel il est inséré.

On a constaté l'apparition de criques après la dépose de la goutte de Stellite^{®} sur des aubes, ce qui induit la mise au rebut de ces aubes.

La présente invention propose une solution simple, efficace et économique à ce problème.

### EXPOSÉ DE L'INVENTION

La présente invention propose une aube de rotor pour une turbomachine d'aéronef, cette aube présentant un axe de rotation une fois solidaire d'un rotor et un axe d'empilement et comportant une pale s'étendant entre une plateforme interne et une plateforme externe qui porte au moins une léchette en saillie, ladite pale comportant un intrados et un extrados et ladite plateforme externe comportant des bords latéraux intrados et extrados, situés respectivement, du côté desdits intrados et extrados, et configurés pour coopérer par complémentarité, et en particulier par emboîtement, avec des bords latéraux complémentaires d'aubes adjacentes, ces bords latéraux comportant chacun un revêtement anti-usure, caractérisée en ce que le revêtement anti-usure du bord latéral situé du côté dudit intrados s'étend sur une paroi d'un premier muret sensiblement rectiligne de la plateforme, et sur une paroi d'un second muret de la plateforme, qui s'étend au moins en partie dans ladite léchette et qui est incliné par rapport audit premier muret dans une direction sensiblement parallèle à un axe transversal d'allongement de la léchette, et en ce que ladite paroi dudit second muret s'étend sur 20 à 50% de la hauteur de la léchette dans laquelle elle s'étend, mesurée le long de l'axe d'empilement.

Le revêtement anti-usure est ainsi déposé sur des murets qui rigidifient l'aube et limitent le risque d'apparition de criques lors de ce dépôt. Ces murets permettent en effet de surépaissir au juste besoin les zones d'application du revêtement anti-usure, et d'assurer ainsi une meilleure dissipation thermique lors du dépôt, réduisant ainsi le risque de formation de criques.

Par ailleurs, la forme des murets est adaptée d'une part pour limiter leur encombrement ainsi que celui du revêtement, et pour éviter que ce dernier vienne au contact du revêtement abradable précité s'étendant autour de la roue et dans lequel les léchettes du talon sont destinées à former des sillons annulaires en fonctionnement. Dans le cas où les léchettes seraient inclinées par rapport à un plan perpendiculaire à l'axe de rotation de la roue, et où les murets de chaque aube seraient alignés (et donc pas inclinés l'un par rapport à l'autre), le second muret risquerait de déborder au-delà de la léchette et de générer un contact non désiré avec le revêtement abradable, se traduisant ainsi par un élargissement du sillon correspondant et un risque de fuites de gaz accrues dans cette zone.

L'aube selon l'invention peut comprendre une ou plusieurs des caractéristiques ci-dessous, prises isolément les unes des autres ou en combinaison les unes avec les autres :
- ledit premier muret a une épaisseur E1 sensiblement constante,
- ledit second muret a une épaisseur E2 inférieure à E1,
- le revêtement anti-usure du bord latéral situé du côté dudit extrados s'étend sur une paroi d'un troisième muret, ce troisième muret ayant une épaisseur E3 similaire à E1,
- chaque épaisseur de muret est mesurée dans une direction sensiblement perpendiculaire à une surface formant le muret, ou dans une direction sensiblement perpendiculaire à un plan longitudinal médian ou un axe d'allongement du muret correspondant,
- ladite léchette comprend deux extrémités longitudinales opposées dont une comprend au moins en partie ladite paroi dudit second muret, et dont l'autre comprend une surépaisseur dans une direction perpendiculaire audit axe d'allongement,
- ladite léchette est inclinée par rapport à un plan perpendiculaire audit axe de rotation,
- l'aube comprend deux léchettes en saillie et ledit premier muret est situé entre ces léchettes, et
- ledit second muret a une première extrémité reliée à une extrémité dudit premier muret et une seconde extrémité libre située au droit dudit bord latéral intrados.

La présente invention concerne encore une roue de rotor pour une turbomachine d'aéronef, comportant un disque portant à sa périphérie une rangée annulaire d'aubes telles que décrites ci-dessus.

La présente invention concerne également une turbomachine d'aéronef, comportant au moins une aube ou une roue telle que décrite ci-dessus.

### BRÈVE DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique en perspective d'une d'aube de roue de turbine pour une turbomachine d'aéronef,
- la figure 2 est une vue schématique à plus grande échelle d'une partie d'une autre aube de roue de turbine pour une turbomachine d'aéronef,
- la figure 3 est une vue schématique de côté d'une aube de rotor selon l'invention,
- la figure 4 est une vue schématique de dessus de l'aube de la figure 3,
- les figures 5 et 6 sont des vues de détails de la figure 4, la figure 6 illustrant une des caractéristiques de l'invention par opposition à la figure 5 qui n'illustre donc pas l'invention, et
- la figure 7 est une vue schématique de dessus de l'aube de la figure 3, avec une coupe transversale.

### DESCRIPTION DETAILLÉE D'UN MODE DE RÉALISATION

L'invention s'applique à une aube 10 de roue mobile telle que décrite ci-dessus en référence aux figures 1 et 2.

L'aube 10 comprend au moins une pale 16 qui s'étend entre deux plateformes, respectivement interne 19 et externe 20. La plateforme interne 19 est reliée à l'extrémité radialement interne de la pale et la plateforme externe 20 est reliée à l'extrémité radialement externe de la pale et comprend des revêtements 36 de matériau anti-usure.

Les figures 3, 4, 6 et 7 illustrent un mode de réalisation de l'invention.

Selon l'invention, le revêtement anti-usure 36 du bord latéral 22 situé du côté de l'intrados 16a de la pale 16 s'étend sur une paroi 40a d'un premier muret 40 qui est situé entre les léchettes 31, 32, et sur une paroi 42a d'un second muret 42 qui s'étend au moins en partie dans la léchette 31. Les murets 40,42 font partie intégrante de la plateforme 20. Comme cela est visible à la figure 3, la paroi 42a s'étend sur environ 20 à 50% de la hauteur de la léchette 31, mesurée le long de l'axe d'empilement X.

Le premier muret 40 est sensiblement rectiligne et a une extrémité aval reliée à un bossage 44 en saillie sur la face extérieure de la plateforme 20. Ce bossage a une forme générale en profil d'aube et forme un prolongement de la pale 16 radialement vers l'extérieur de la plateforme 20.

Le second muret 42 est sensiblement rectiligne et a son extrémité aval reliée à l'extrémité amont du premier muret 40. Ce second muret 42 est incliné par rapport au premier muret 40 dans une direction sensiblement parallèle à un axe transversal Z d'allongement de la léchette 31. Autrement dit, le second muret 42 est sensiblement parallèle à la léchette 31 et le premier muret 40 est incliné par rapport à la léchette 31 et au second muret 42.

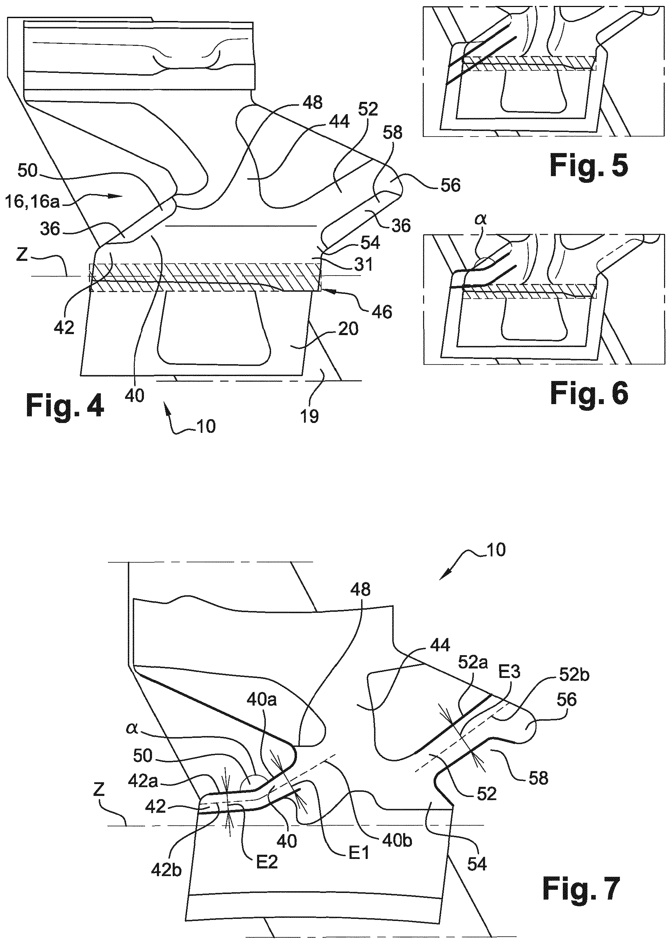

La figure 7 est une vue en coupe transversale de l'aube, le plan de coupe passant sensiblement par les murets 40, 42 et le bossage 44, et étant sensiblement parallèle au plan de la plateforme 20. La figure 7 montre les épaisseurs E1, E2 des murets 40, 42 ainsi que leur angle d'inclinaison α, qui est par exemple compris entre 120 et 150°. Autrement dit, le second muret 42 forme un angle sensiblement nul avec la léchette 31 ou l'axe Z, et le premier muret 40 est incliné par rapport à la léchette 31 ou l'axe Z d'un angle compris entre 30 et 60°.

Cet angle α est également visible à la figure 6 qui illustre des murets 40, 42 inclinés l'un par rapport à l'autre, par opposition à la figure 5 qui montre des murets alignés. Dans ce dernier cas, et comme expliqué dans ce qui précède, le muret 42 peut s'étendre au-delà de la léchette et le revêtement anti-usure qu'il porte est susceptible d'élargir le sillon 46 formé dans le revêtement abradable qui entoure l'aube, du fait de la rotation du disque portant cette aube.

Le sillon 46 est ici partiellement représenté par une zone hachurée dont les dimensions sont fonction des dimensions maximales de la léchette 31. Dans l'exemple représenté, la léchette 31 comprend une extrémité longitudinale située du côté de l'intrados 16a et dans laquelle s'étend le muret 42, et une extrémité longitudinale opposée qui est située du côté de l'extrados de la pale. Cette dernière extrémité est surépaissie dans une direction perpendiculaire à l'axe d'allongement de la léchette et a une forme générale dite en pied d'éléphant. Cette extrémité surépaissie définit l'épaisseur la plus importante de la léchette et de ce fait l'épaisseur du sillon 46. Ce sillon est annulaire et donc destiné à s'étendre tout autour de la roue portant l'aube.

Dans l'exemple représenté, les murets 40, 42 définissent entre eux et avec un ergot 48 présent sur la paroi 40a du muret 40, un premier évidement 50 destiné à recevoir le revêtement anti-usure 36.

Du côté de l'extrados de la pale 16, le revêtement anti-usure est situé sur une paroi 52a d'un troisième muret 52 qui a une orientation générale sensiblement parallèle au muret 40. Le muret 52 a une épaisseur E3. Le muret 52 définit avec deux ergots 54, 56 présents à des extrémités opposées de la paroi 52a, un second évidement 58 destiné à recevoir le revêtement anti-usure 36.

L'épaisseur d'un muret est mesurée dans une direction sensiblement perpendiculaire à une surface formant le muret ou à un plan longitudinal médian ou un axe d'allongement de ce muret. L'épaisseur du muret 42 peut être mesurée dans une direction sensiblement perpendiculaire à l'axe Z. Les axes d'allongement des murets 40, 42 et 52 sont respectivement désignés par les références 40b, 42b et 52b dans la figure 7.

Les épaisseurs E1, E2 et E3 sont par exemple comprises entre 1 et 3mm. L'épaisseur E2 du muret 42 est de préférence inférieure à celle E1 du muret 40. L'épaisseur E1 est par exemple de l'ordre de 2mm et l'épaisseur E2 est par exemple de l'ordre de 1,5mm. L'épaisseur E3 est de préférence similaire à l'épaisseur E1, et est par exemple de l'ordre de 2mm. Ces épaisseurs assurent une bonne tenue mécanique et évitent la formation de criques lors du dépôt du stellite.

L'aube peut être réalisée de la façon suivante. Elle est d'abord réalisée brute de fonderie. Les évidements 50, 58 sont ensuite comblés avec les revêtements anti-usure 36, par exemple par dépôt du matériau Stellite^{®} en fusion, qui sont situés sur les parois des murets. L'aube peut ensuite subir une opération d'usinage pour la mettre aux côtes souhaitées. Lors de cette dernière opération, les revêtements 36 peuvent être usinés, ainsi que les ergots et murets qui délimitent les évidements de réception de ces revêtements.

## Revendications

1. Aube de rotor (10) pour une turbomachine d'aéronef, cette aube présentant un axe (A) de rotation une fois solidaire d'un rotor et un axe d'empilement (X) et comportant une pale (16) s'étendant entre une plateforme interne (19) et une plateforme externe (20) qui porte au moins une léchette (31, 32) en saillie, ladite pale comportant un intrados (16a) et un extrados (16b) et ladite plateforme externe comportant des bords latéraux intrados (22) et extrados (21), situés respectivement du côté desdits intrados (16a) et extrados (16b), et configurés pour coopérer par complémentarité avec des bords latéraux (21, 22) complémentaires d'aubes adjacentes, ces bords latéraux comportant chacun un revêtement anti-usure (36), **caractérisée en ce que** le revêtement anti-usure du bord latéral intrados s'étend sur une paroi (40a) d'un premier muret (40) sensiblement rectiligne de la plateforme, et sur une paroi (42a) d'un second muret (42) de la plateforme, qui s'étend au moins en partie dans ladite léchette (31) et qui est incliné par rapport audit premier muret dans une direction sensiblement parallèle à un axe transversal (Z) d'allongement de la léchette et **en ce que** ladite paroi (42a) dudit second muret (42) s'étend sur 20 à 50% de la hauteur de la léchette (31) dans laquelle elle s'étend, mesurée le long de l'axe d'empilement (X).

2. Aube (10) selon la revendication précédente, dans laquelle ledit premier muret (40) a une épaisseur E1 sensiblement constante.

3. Aube (10) selon la revendication précédente, dans laquelle ledit second muret (42) a une épaisseur E2 inférieure à E1.

4. Aube (10) selon la revendication 2 ou 3, dans laquelle le revêtement anti-usure (36) du bord latéral situé du côté dudit extrados s'étend sur une paroi (52) d'un troisième muret (52), ce troisième muret ayant une épaisseur E3 similaire à E1.

5. Aube (10) selon l'une des revendications précédentes, dans laquelle ladite léchette (31) comprend deux extrémités longitudinales opposées dont une comprend au moins en partie ladite paroi (42a) dudit second muret (42), et dont l'autre comprend une surépaisseur dans une direction perpendiculaire audit axe d'allongement (X).

6. Aube (10) selon l'une des revendications précédentes, dans laquelle ladite léchette (31) est inclinée par rapport à un plan perpendiculaire audit axe de rotation (A).

7. Aube (10) selon l'une des revendications précédentes, dans laquelle ledit second muret (42) a une première extrémité reliée à une extrémité dudit premier muret (40) et une seconde extrémité libre située au droit dudit bord latéral intrados.

8. Roue de rotor pour une turbomachine d'aéronef, comportant un disque portant à sa périphérie une rangée annulaire d'aubes (10) selon l'une des revendications précédentes.

9. Turbomachine d'aéronef, comportant au moins une aube (10) selon l'une des revendications 1 à 7 ou une roue selon la revendication 8.

## Patentansprüche

1. Rotorleitschaufel (10) für ein Flugzeugturbinentriebwerk, wobei diese Leitschaufel eine Drehachse (A) aufweist, die einmal fest mit einem Rotor und einer Stapelachse (X) verbunden ist, und ein Schaufelblatt (16) beinhaltet, das sich zwischen einer Innenplattform (19) und einer Außenplattform (20) erstreckt, die mindestens eine hervorstehende Dichtungslippe (31, 32) trägt, wobei das Schaufelblatt eine Druckseite (16a) und eine Saugseite (16b) beinhaltet, und die Außenplattform Seitenränder der Druckseite (22) und Saugseite (21) beinhaltet, die sich jeweils auf Seiten der Druckseite (16a) und Saugseite (16b) befinden, und konfiguriert sind, um durch Ergänzung mit den ergänzenden Seitenrändern (21,22) angrenzender Leitschaufeln zusammenwirken, wobei diese Seitenränder jeweils eine Verschleißschutzbeschichtung (36) beinhalten, **dadurch gekennzeichnet, dass** sich die Verschleißschutzbeschichtung des Seitenrandes der Saugseite auf einer Wand (40a) einer ersten im Wesentlichen geradlinigen Leiste (40) der Plattform, und auf einer Wand (42a) einer zweiten Leiste (42) der Plattform erstreckt, die sich mindestens teilweise in der Dichtungslippe (31) erstreckt und die in Bezug auf die erste Leiste in einer im Wesentlichen parallelen Richtung zu einer Verlängerungsquerachse (Z) der Dichtungslippe erstreckt und dass sich die Wand (42a) der zweiten Leiste (42) über 20 bis 50% der Höhe der Dichtungslippe (31) erstreckt, in der sie sich erstreckt, entlang der Stapelachse (X) gemessen.

2. Leitschaufel (10) nach dem vorstehenden Anspruch, wobei die erste Leiste (40) eine im Wesentlichen konstante Dicke E1 aufweist.

3. Leitschaufel (10) nach dem vorstehenden Anspruch, wobei die zweite Leiste (42) eine Dicke E2 kleiner als E1 aufweist.

4. Leitschaufel (10) nach Anspruch 2 oder 3, wobei sich die Verschleißschutzbeschichtung (36) des Seitenrandes, die sich auf Seiten der Saugseite befindet, auf einer Wand (52) einer dritten Leiste (52) erstreckt, wobei diese dritte Leiste eine Dicke R3 ähnlich E1 aufweist.

5. Leitschaufel (10) nach einem der vorstehenden Ansprüche, wobei die Dichtungslippe (31) zwei gegenüberliegende Längsenden umfasst, von dem eines mindestens teilweise die Wand (42a) der zweiten Leiste (42) umfasst, und von dem das andere eine zusätzliche Dicke in einer Richtung senkrecht zu der Stapelachse (X) umfasst.

6. Leitschaufel (10) nach einem der vorstehenden Ansprüche, wobei die Dichtungslippe (31) in Bezug auf eine Ebene senkrecht zur Drehachse (A) geneigt ist.

7. Leitschaufel (10) nach einem der vorstehenden Ansprüche, wobei die zweite Leiste (42) ein erstes Ende aufweist, das mit einem Ende der ersten Leiste (40) verbunden ist, und ein zweites freies Ende, das sich auf Höhe des Seitenrandes der Druckseite befindet.

8. Rotorrad für ein Flugzeugturbinentriebwerk, eine Scheibe beinhaltend, die an ihrem Umfang eine ringförmige Reihe von Leitschaufeln (10) nach einem der vorstehenden Ansprüche trägt.

9. Flugzeugturbomaschine, das mindestens eine Leitschaufel (10) nach einem der Ansprüche 1 bis 7 oder ein Rad nach Anspruch 8 beinhaltet.

## Claims

1. A rotor vane (10) for an aircraft turbomachine, this vane having an axis (A) of rotation once it has been rigidly connected to a rotor and a stacking axis (X) and comprising a blade (16) extending between an internal platform (19) and an external platform (20) bearing at least one projecting lip (31, 32), said blade comprising a pressure side (16a) and an suction side (16b) and said external platform comprising pressure side (22) and suction side (21) lateral edges, located on the side of said pressure side (16a) and suction side (16b) respectively, and configured to cooperate in a form-fitting manner with the complementary lateral edges (21, 22) of adjacent vanes, each of said lateral edges comprising a wear-resistant covering (36), **characterized in that** the wear-resistant covering of the pressure side lateral edge extends over one wall (40a) of a substantially rectilinear first ridge (40) of the platform, and over one wall (42a) of a second ridge (42) of the platform, which extends at least partially in said lip (31) and which is inclined relative to said first ridge in a direction substantially parallel to a transverse axis (Z) of elongation of the lip and **in that** said wall (42a) of said second ridge (42) extends over 20 to 50% of the height of the lip (31) in which it extends, measured along the stacking axis (X).

2. The vane (10) according to the preceding claim, wherein said first ridge (40) has a substantially constant thickness E1.

3. The vane (10) according to the preceding claim, wherein said second ridge (42) has a thickness E2 less than E1.

4. The vane (10) according to claim 2 or 3, wherein the wear-resistant covering (36) of the lateral edge located on the side of said suction side extends over a wall (52) of a third ridge (52), this third ridge having a thickness E3 similar to E1.

5. The vane (10) according to one of the preceding claims, wherein said lip (31) comprises two opposite longitudinal ends, one of which comprises at least partially said wall (42a) of said second ridge (42), and the other of which comprises an excess thickness in a direction perpendicular to said axis of elongation (X).

6. The vane (10) according to one of the preceding claims, wherein said lip (31) is inclined with respect to a plane perpendicular to said axis of rotation (A).

7. The vane (10) according to one of the preceding claims, wherein said second ridge (42) has a first end connected to one end of said first ridge (40) and a second free end located at said pressure side lateral edge.

8. The rotor wheel for an aircraft turbomachine, comprising a disc carrying at its periphery an annular row of vanes (10) according to one of the preceding claims.

9. An aircraft turbomachine comprising at least one vane (10) according to one of claims 1 to 7 or a wheel according to claim 8.
